(19) Europäisches Patentamt
European Patent Office
Office européen des brevets

(11) EP 4 503 186 A1

(12) # EUROPEAN PATENT APPLICATION
published in accordance with Art. 153(4) EPC

(43) Date of publication:
**05.02.2025 Bulletin 2025/06**

(21) Application number: **23780251.7**

(22) Date of filing: **24.03.2023**

(51) International Patent Classification (IPC):
***H01M 4/38** (2006.01)* ***H01M 4/36** (2006.01)*

(52) Cooperative Patent Classification (CPC):
**H01M 4/36; H01M 4/38;** Y02E 60/10

(86) International application number:
**PCT/JP2023/011990**

(87) International publication number:
**WO 2023/190241 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022060610**

(71) Applicant: **Panasonic Intellectual Property Management Co., Ltd.**
**Kadoma-shi, Osaka 571-0057 (JP)**

(72) Inventors:
- **SATO, Shin**
**Kadoma-shi, Osaka 571-0057 (JP)**
- **SATO, Yosuke**
**Kadoma-shi, Osaka 571-0057 (JP)**
- **SAKATA, Motohiro**
**Kadoma-shi, Osaka 571-0057 (JP)**
- **DEGUCHI, Masaki**
**Kadoma-shi, Osaka 571-0057 (JP)**

(74) Representative: **Eisenführ Speiser Patentanwälte Rechtsanwälte PartGmbB**
**Gollierstraße 4**
**80339 München (DE)**

(54) **NEGATIVE ELECTRODE MATERIAL FOR SECONDARY BATTERIES, AND SECONDARY BATTERY**

(57) A negative electrode for a secondary battery includes a silicon-containing particle, and a coating layer that covers at least a portion of the surface of the silicon-containing particle. The silicon-containing particle includes an ion-conducting phase, and silicon phases dispersed in the ion-conducting phase. The coating layer includes a lithium sulfonate compound and a linear saturated fatty acid compound having 10 or more carbon atoms.

*FIG. 1*

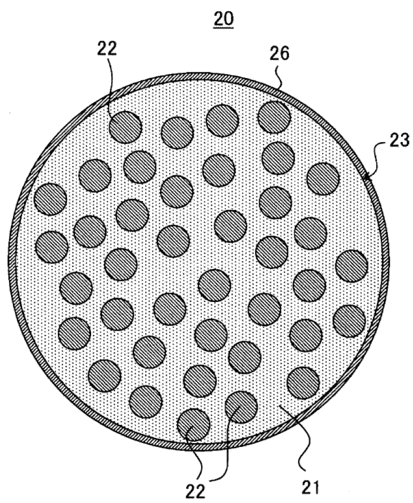


EP 4 503 186 A1

## Description

[Technical Field]

The present disclosure relates to a negative electrode material for a secondary battery, and a secondary battery.

[Background Art]

Non-aqueous electrolyte secondary batteries exemplified by a lithium-ion secondary battery are used as power sources of electronic devices such as portable terminals, motive power sources of vehicles such as electric cars, and the like. Graphite is commonly used as a negative electrode active material for non-aqueous electrolyte secondary batteries.

In recent years, use of a negative electrode active material with a larger capacity density (capacity per unit mass) than that of graphite in non-aqueous electrolyte secondary batteries has been considered. For example, composite particles having a silicate phase and silicon phases dispersed in the silicate phase are considered as a negative electrode active material.

PTL 1 (WO 2019/151016 A1) proposes a negative electrode active material for a secondary battery that includes a silicate phase containing Li, Si, and M (M is an alkali metal, an alkaline earth metal, or an element other than Si), silicon particles dispersed in the silicate phase, and metal particles that are dispersed in the silicate phase and contain, as the main component, one or more metals selected from Fe, Cr, Ni, Mn, Cu, Mo, Zn, and Al or an alloy thereof and in which the contents of the elements, Li, Si, and M in the silicate phase relative to the total content of the elements other than oxygen are 3 to 45 mol%, 40 to 78 mol%, and 1 to 40 mol%, respectively.

PTL 2 (WO 2019/151026 A1) proposes a negative electrode active material for a secondary battery that includes a silicate phase containing Li, Si, and M (M is an alkali metal, an alkaline earth metal, or an element other than Si), silicon particles dispersed in the silicate phase, and oxide particles that are dispersed in the silicate phase and include at least one type selected from Zr-containing oxide particles, Ce-containing oxide particles, Ca-containing oxide particles, Al-containing oxide particles, Fe-containing oxide particles, Mg-containing oxide particles, Ti-containing oxide particles, and W-containing oxide particles and in which the contents of the elements, Li, Si, and M in the silicate phase relative to the total content of the elements other than oxygen are 3 to 45 mol%, 40 to 78 mol%, and 1 to 40 mol%, respectively.

[Citation List]

[Patent Literature]

[PTL 1]: WO 2019/151016 A1
[PTL 2]: WO 2019/151026 A1

[Summary of Invention]

[Technical Problem]

The silicate phase in the composite particle tends to undergo gradual corrosion due to a side reaction that occurs inside a battery containing a non-aqueous electrolyte. The corrosion degrades the composite particle, and thus the cycle properties of the battery deteriorate.

With the negative electrode active materials disclosed in PTL 1 (WO 2019/151016 A1) and PTL 2 (WO 2019/151026 A1), breakage of the particles caused by expansion and contraction of silicon during charge and discharge can be suppressed to some extent, but suppression of a side reaction is still insufficient.

[Solution to Problem]

In view of the above, one aspect of the present disclosure relates to a negative electrode material for a secondary battery, the negative electrode material including: a silicon-containing particle; and a coating layer that covers at least a portion of a surface of the silicon-containing particle, wherein the silicon-containing particle includes: an ion-conducting phase; and silicon phases dispersed in the ion-conducting phase, and the coating layer includes: a lithium sulfonate compound; and a linear saturated fatty acid compound having 10 or more carbon atoms.

Another aspect of the present disclosure relates to a secondary battery including: a positive electrode; a negative electrode; and a non-aqueous electrolyte, wherein the negative electrode includes the negative electrode material for a

secondary battery described above.

[Advantageous Effects of Invention]

With the present disclosure, it is possible to suppress deterioration of the cycle properties of a secondary battery having a negative electrode that includes silicon-containing particles.
While novel features of the invention are set forth particularly in the appended claims, the invention, both as to organization and content, will be better understood and appreciated, along with other objects and features thereof, from the following detailed description taken in conjunction with the drawings.

[Brief Description of Drawings]

FIG. 1 is a schematic cross-sectional view of a negative electrode material for a secondary battery according to an embodiment of the present disclosure.
FIG. 2 is a partially cutaway schematic perspective view of a non-aqueous electrolyte secondary battery according to an embodiment of the present disclosure.

[Description of Embodiments]

Although an embodiment of the present disclosure will be described below using an example, the present disclosure is not limited to an example described below. Although specific numerical values, materials, and the like may be mentioned as examples in the following description, other numerical values, materials, and the like may be used as long as effects of the present disclosure can be obtained. The wording "numerical value A to numerical value B" as used herein encompasses the numerical value A and the numerical value B and can be read as "numerical value A or more and numerical value B or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit. When a plurality of materials are given as examples, one type of material selected from these materials may be used alone, or two or more types of materials may be used in combination.
A negative electrode material for a secondary battery according to an embodiment of the present disclosure includes a silicon-containing particle, and a coating layer that covers at least a portion of the surface of the silicon-containing particle. The silicon-containing particle includes an ion-conducting phase, and silicon phases dispersed in the ion-conducting phase. The coating layer includes a lithium sulfonate compound and a linear saturated fatty acid compound having 10 or more carbon atoms. The coating layer is a mixed layer of the lithium sulfonate compound and the linear saturated fatty acid compound. The silicon-containing particle is also referred to as a "composite particle" hereinafter.
The ion-conducting phase may include, for example, at least one type selected from the group consisting of a silicate phase, a silicon oxide phase, and a carbon phase. At least one of the silicate phase and the silicon oxide phase is also referred to as a "silicon compound phase" hereinafter. A composite particle in which the silicon phases are dispersed in the silicate phase is also referred to as a "silicate phase-containing composite particle". A composite particle in which the silicon phases are dispersed in the silicon oxide phase is also referred to as a "silicon oxide phase-containing composite particle". A composite particle in which the silicon phases are dispersed in the carbon phase is also referred to as a "carbon phase-containing composite particle".
Due to the lithium sulfonate compound coating the surface of the composite particle (ion-conducting phase), the composite particle is protected from the non-aqueous electrolyte, a side reaction with the non-aqueous electrolyte is suppressed, and corrosion of the ion-conducting phase caused by the side reaction is suppressed. Deterioration of the cycle properties of the secondary battery caused by degradation of the composite particle resulting from the corrosion is suppressed.
Due to the coexistence of the lithium sulfonate compound with the linear saturated fatty acid compound in the coating layer, the properties of holding the lithium sulfonate compound on the surface of the composite particle are improved, and the lithium sulfonate compound effectively covers the surface of the composite particle. Accordingly, the effect of suppressing corrosion of the ion-conducting phase, which is exhibited by the lithium sulfonate compound, is remarkably obtained.
In a production method, which will be described later, the coating layer can be formed such that the linear saturated fatty acid compound is distributed all over the coating layer and a large amount of the lithium sulfonate compound is distributed in the layer inner-side portion of the coating layer (near the surface of the composite particle). With such a coating layer, the lithium sulfonate compound is strongly protected.

The negative electrode is produced by, for example, preparing a slurry that includes a negative electrode material and the like and water, applying the slurry on a negative electrode current collector, and forming a negative electrode mixture layer through drying and optionally rolling. The linear saturated fatty acid compound suppresses contact of the lithium sulfonate compound in the coating layer with water. The linear saturated fatty acid compound has a linear saturated aliphatic hydrocarbon group (having 9 or more carbon atoms), which is a hydrophobic group, and is slightly soluble in water. Accordingly, dissolution of the lithium sulfonate compound in water is suppressed during the production of a negative electrode.

If the slurry is prepared by adding the lithium sulfonate compound, the linear saturated fatty acid compound, and water to composite particles, the lithium sulfonate compound dissolves in water, and thus the lithium sulfonate compound cannot be sufficiently supported on the surfaces of the composite particles. When NMP is used as a dispersion medium of the slurry above instead of water, the linear saturated fatty acid compound dissolves in NMP, and thus the lithium sulfonate compound is less likely to be supported on the surfaces of the composite particles.

(Lithium Sulfonate Compound)

The lithium sulfonate compound is a lithium salt of a sulfonate compound. The sulfonate compound is an organic compound having a sulfonate group ($SO_3H$). The sulfonate compound may be a monosulfonate compound or a disulfonate compound. One of the lithium sulfonate compounds may be used alone, or two or more of the lithium sulfonate compounds may be used in combination.

The lithium sulfonate compound is preferably a compound represented by General Formula (1) below. In General Formula (1), R is an n-valent aliphatic hydrocarbon group having 1 to 5 carbon atoms, and n is 1 or 2.

[Chemical Formula 1]

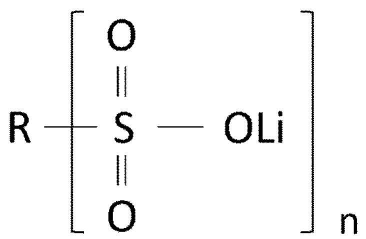

(1)

It is more preferable that the lithium sulfonate compound includes at least one type selected from the group consisting of lithium methanesulfonate, lithium ethanesulfonate, and lithium propanesulfonate, and it is particularly preferable that the lithium sulfonate compound includes lithium methanesulfonate out of these compounds.

The amount of the lithium sulfonate compound that covers the surface of the composite particle (also referred to as "the amount of the lithium sulfonate compound supported" hereinafter) may be 1 part by mass or more, 1 part by mass or more and 10 parts by mass or less, or 1 part by mass or more (or 2 parts by mass or more) and 6 parts by mass or less, relative to 100 parts by mass of the composite particle.

When the amount of the lithium sulfonate compound supported is 1 part by mass or more, the lithium sulfonate compound can sufficiently cover the surface of the composite particle, and the effect of suppressing a side reaction, which is exhibited by the lithium sulfonate compound, is likely to be obtained. When the amount of the lithium sulfonate compound supported is 6 parts by mass or less, a negative electrode material (coating layer) with low resistance is likely to be obtained. When a coating layer that includes the lithium sulfonate compound and the linear saturated fatty acid compound is formed, the lithium sulfonate compound in an amount within the range above can be supported on the surface of the composite particle.

(Linear Saturated Fatty Acid Compound)

The linear saturated fatty acid compound includes linear saturated fatty acids and metal salts thereof. The linear saturated fatty acids are compounds having a structure in which a single carboxy group (COOH) is linked to the terminus of a linear saturated hydrocarbon group (linear alkyl group) having 9 or more carbon atoms. Examples of the metals for forming the salts include lithium, calcium, aluminum, magnesium, sodium, zirconium, potassium, zinc, copper, and iron. Out of these metals, lithium is preferable.

It is desirable that the linear saturated fatty acid compound has excellent stability against a non-aqueous electrolyte and easily melts in a heat treatment step during the formation of the coating layer, which will be described later. In this case, the lithium sulfonate compound can be firmly supported on the surface of the composite particle due to the

linear saturated fatty acid compound, and the effect of suppressing a side reaction, which is exhibited by the lithium sulfonate compound, is likely to be stably obtained.

The linear saturated fatty acid compound having 10 or more carbon atoms (higher fatty acid compound) is slightly soluble in water, and the effect of protecting the lithium sulfonate compound, which is exhibited by the linear saturated fatty acid compound, is likely to be obtained during the production of a negative electrode using a slurry containing water. The number of carbon atoms in the linear saturated fatty acid compound may be 10 or more and 30 or less, or 10 or more and 25 or less. When the number of carbon atoms in the linear saturated fatty acid compound is 25 or less, the linear saturated fatty acid compound is likely to melt through heat treatment, and lithium sulfonate is likely to be supported on the surface of the composite particle.

Examples of the linear saturated fatty acid compound having 10 to 30 carbon atoms include capric acid (having 10 carbon atoms), lauric acid (having 12 carbon atoms), myristic acid (having 14 carbon atoms), pentadecylic acid (having 15 carbon atoms), palmitic acid (having 16 carbon atoms), margaric acid (having 17 carbon atoms), stearic acid (having 18 carbon atoms), arachidic acid (having 20 carbon atoms), and behenic acid (having 22 carbon atoms). One of these linear saturated fatty acid compounds may be used alone, or two or more of these linear saturated fatty acid compounds may be used in combination.

It is preferable that the linear saturated fatty acid compound includes stearic acid compounds from the viewpoint of low solubility in water, a low melting point, favorable dispersibility after coating due to the presence of a hydrophilic group and a hydrophobic group, and the like. The stearic acid compounds include stearic acid and metal salts thereof. Examples of the metals for forming the salts include those shown as the examples in the description above. In particular, lithium stearate (STL) is preferable from the viewpoint that it is also a lithium salt and has good affinity with the lithium sulfonate compound.

The amount of the linear saturated fatty acid compound that covers the surface of the composite particle (also referred to as "the amount of the linear saturated fatty acid compound supported" hereinafter) may be 1 part by mass or more, or 1 part by mass or more (or 2 parts by mass or more) and 6 parts by mass or less, relative to 100 parts by mass of the composite particle. When the amount of the linear saturated fatty acid compound supported is 1 part by mass or more, an effect of improving the properties of holding the lithium sulfonate compound on the surface of the composite particle, which is exhibited by the linear saturated fatty acid compound, is sufficiently obtained. When the amount of the linear saturated fatty acid compound supported is 6 parts by mass or less, a negative electrode material (coating layer) with low resistance is likely to be obtained.

The amounts of the lithium sulfonate compound supported and the linear saturated fatty acid compound supported (relative to 100 parts by mass of the composite particle) can be determined using the following method.

The negative electrode material is washed with N-methyl-2-pyrrolidone (NMP) to dissolve the the linear saturated fatty acid compound. In this washing step, NMP in which the negative electrode material is added is stirred at 20°C for 1 hour and is then filtered, and the residue (solid) is further washed with NMP. The filtrate is collected, and the mass of the linear saturated fatty acid compound that dissolved in the filtrate (NMP) is determined through quantitative analysis such as ICP optical emission spectroscopy.

The residue (solid) is dried to remove NMP attached thereto. Thereafter, the solid is washed with water to dissolve the lithium sulfonate compound. In this washing step, water in which the solid is added is stirred at 20°C for 1 hour and is then filtered, and the residue (solid) is further washed with water. The filtrate is collected, and the mass of the lithium sulfonate compound that dissolved in the filtrate (water) is determined through quantitative analysis such as ICP optical emission spectroscopy.

The residue (solid) is dried to remove water attached thereto, and a solid that does not dissolve in NMP and water is obtained. When the negative electrode material includes a silicon compound phase-containing composite particle, the mass of the solid that does not dissolve in NMP and water is taken as the mass of the silicon compound phase-containing composite particle.

When the negative electrode material includes a silicon compound phase-containing composite particle with a conductive layer, quantitative analysis of carbon is conducted on the solid that does not dissolve in water and NMP using a carbon-sulfur analyzer. The amount of carbon determined is derived from the carbon material of the conductive layer. The value obtained by subtracting the mass of carbon determined through the analysis from the mass of the solid that does not dissolve in water and NMP is taken as the mass of the silicon compound phase-containing composite particle.

The masses of the lithium sulfonate compound and the composite particle determined as described above are used to determine the amount of the lithium sulfonate compound supported as per the formula: (mass of lithium sulfonate compound / mass of composite particle)$\times$100.

The masses of the linear saturated fatty acid compound and the composite particle determined as described above are used to determine the amount of the linear saturated fatty acid compound supported as per the formula: (mass of linear saturated fatty acid compound / mass of composite particle)$\times$100.

It is preferable that the coating layer is thin enough not to practically affect the average particle diameter of the composite particle. The thickness of the coating layer is preferably 1 nm or more from the viewpoint of protecting the

composite particle from the electrolytic solution. The thickness of the coating layer is preferably 300 nm or less from the viewpoint of suppressing an increase in resistance. The coating layer may be thinner than the conductive layer, which will be described later. The thickness of the coating layer can be measured by observing the cross section of the composite particle using an electron microscope. A scanning electron microscope (SEM) or TEM (transmission electron microscope) is used as the electron microscope.

(Conductive Layer)

The conductive layer that includes a conductive carbon material may be interposed between the composite particle and the coating layer from the viewpoint of an improvement in conductivity. That is to say, the coating layer may be formed to cover the conductive layer on the surface of the composite particle. It is preferable that the conductive layer is thin enough not to practically affect the average particle diameter of the composite particle. The thickness of the conductive layer is preferably 1 nm or more from the viewpoint of ensuring the conductivity. The total thickness of the coating layer and the conductive layer is preferably 300 nm or less from the viewpoint of suppressing an increase in resistance. The thickness of the conductive layer can be measured as in the case of the coating layer.

The conductive layer is formed by mixing a raw material of the conductive carbon material and the composite particles and firing the mixture to carbonize the raw material of the conductive carbon material. Examples of the raw material of the conductive material include coal pitch or coal-tar pitch, petroleum pitch, and a phenolic resin. The mixture of the raw material of the conductive carbon material and the composite particles is fired in, for example, an inert atmosphere (e.g., argon atmosphere, nitrogen atmosphere, etc.). The firing temperature is preferably 450°C or higher and 1000°C or lower. When the firing temperature is within the temperature range above, the conductive layer with high conductivity is likely to be formed on the silicate phase with low crystallinity. The firing temperature is preferably 550°C or higher and 900°C or lower, and more preferably 650°C or higher and 850°C or lower. The firing time is, for example, 1 hour or more and 10 hours or less.

(Method for Producing Coating Layer)

A method for producing a coating layer includes, for example, a mixing step of obtaining a mixture by dry-mixing the composite particles (or the composite particles with the conductive layer) and powders of the lithium sulfonate compound and the linear saturated fatty acid compound, and a heat treatment step of heating the mixture subsequently to the mixing step. When the composite particles have the conductive layer on their surfaces, the coating layer is formed on the surface of the composite particle via the conductive layer.

An intermediate (mixture) in which the mixture of the lithium sulfonate compound and the linear saturated fatty acid compound is attached to the surfaces of the composite particles is obtained through the mixing step. A ball milling method or the like can be used for the dry-mixing. The addition amount of the lithium sulfonate compound may be 1 part by mass or more and 6 parts by mass or less relative to 100 parts by mass of the composite particles. The addition amount of the linear saturated fatty acid compound may be 1 part by mass or more and 6 parts by mass or less relative to 100 parts by mass of the composite particles.

In the heat treatment step, the intermediate is heated to, for example, a temperature higher than the melting point of the linear saturated fatty acid compound. The linear saturated fatty acid compound in the mixture melts through the heat treatment step and then penetrates and diffuses around the composite particles and the lithium sulfonate compound particles such that the molten linear saturated fatty acid compound fills the gaps between the composite particles and the lithium sulfonate compound particles and the gaps between the lithium sulfonate compound particles. Accordingly, the properties of holding the lithium sulfonate compound on the surfaces of the composite particles are improved. The coating layer, which is a mixed layer of the lithium sulfonate compound and the linear saturated fatty acid compound, is thus formed. The composite particles with the coating layer are obtained by crushing the mixture after the heat treatment.

It is desirable that the heat treatment is conducted at a temperature that is higher than or equal to the melting point of the linear saturated fatty acid compound and is lower than or equal to a decomposition temperature of the linear saturated fatty acid compound. When lithium stearate is used as the linear saturated fatty acid compound, it is suitable that the heat treatment temperature is higher than or equal to the melting point of lithium stearate (220°C) and lower than or equal to the decomposition temperature of lithium stearate (400°C), and the heat treatment temperature is preferably, for example, 250°C or higher and 300°C or lower. It is suitable that the heat treatment is conducted under an inert gas atmosphere. It is suitable that the heat treatment time is, for example, approximately 1 to 3 hours.

It is preferable that the particle diameters of the lithium sulfonate compound and the linear saturated fatty acid compound to be added in the mixing step are smaller than the particle diameter of the composite particle, respectively. In this case, the lithium sulfonate compound and the linear saturated fatty acid compound are likely to uniformly cover the surface of the composite particle (coating layer). The average particle diameters of the lithium sulfonate compound and the linear saturated fatty acid compound may be 1 to 100 μm or 1 to 10 μm.

When the coating layer is formed using the production method above, the lithium sulfonate compound in the coating layer may have a tendency that substantially no lithium sulfonate compound is distributed in the layer surface-side portion of the coating layer and a large amount of the lithium sulfonate compound is distributed in the layer inner-side portion of the coating layer. It is conceivable that this is due to an influence of an affinity between the lithium sulfonate compound and the linear saturated fatty acid compound and a relationship between the specific gravities thereof (the fact that the specific gravity of the lithium sulfonate compound is larger). Note that, when the thickness of the coating layer is defined as T, the layer surface-side portion is a region within a depth of less than 0.01T from the outermost surface of the coating layer. The layer inner-side portion is a region 0.2T or more deep from the outermost surface of the coating layer. When the lithium sulfonate compound is distributed as described above, the coating layer strongly protects the lithium sulfonate compound, and the effect of suppressing corrosion of the ion-conducting phase (suppressing a side reaction), which is exhibited by the lithium sulfonate compound, is remarkably obtained.

The coating layer can be analyzed using, for example, X-ray photoelectron spectroscopy (XPS), Raman spectroscopy, time-of-flight secondary ion mass spectrometry (TOF-SIMS), or the like. When surface analysis is conducted on the negative electrode material using XPS, a peak derived from the lithium sulfonate compound is likely to be observed in the layer inner-side portion of the coating layer. On the other hand, this peak is hardly observed in the layer surface-side portion of the coating layer. Specifically, regarding this peak, the binding energy is around 165 to 170 eV and the intensity (c/s) is 200 to 1000.

(Composite Particle)

The composite particle has a structure in which the silicon phases are dispersed in the ion-conducting phase (matrix). The ion-conducting phase mitigates stress caused by expansion and contraction of the silicon phases during charge and discharge, and thus cracks and breakage of the composite particle are suppressed. Therefore, it is possible to achieve both an increase in capacity due to silicon being contained and an improvement in the cycle properties. The ion-conducting phase may include the silicon compound phase (at least one of the silicate phase and the silicon oxide phase), and/or may include the carbon phase. The ion-conducting phase may be constituted of a single phase or a plurality of phases.

The silicon oxide phase is constituted of a compound of Si and O. The main component (95 to 100 mass%, for example) of the silicon oxide phase may be silicon dioxide. The silicate phase is constituted of a compound that includes a metal element, silicon (Si), and oxygen (O). It is preferable that the silicate phase includes at least lithium silicate. In this case, lithium ions easily enter and leave the silicate phase. Note that, when the silicon oxide phase and the silicate phase are compared, it is preferable that the main component is the silicate phase since the irreversible capacity is small. Here, the "main component" refers to a component that makes up 50 mass% or more of the total mass of the silicon compound phase, and may be a component that makes up 70 mass% or more. The ion-conducting phase may be constituted of the silicon compound phase, include the lithium silicate phase as the main component, and include a small amount of silicon oxide phase.

The composite particle may be a composite particle (silicate phase-containing composite particle) that includes a silicate phase and silicon phases dispersed in the silicate phase. The silicate phase-containing composite particle is obtained by, for example, pulverizing a mixture of a silicate and raw material silicon into fine particles using a ball mill or the like while stirring the mixture, heating the mixture in an inert atmosphere, and pulverizing a fired product obtained through the heat treatment.

The silicate phase preferably includes at least one of alkali metal elements (Group 1 elements excluding hydrogen in the long-form periodic table) and Group 2 elements in the long-form periodic table. The alkali metal elements include lithium (Li), potassium (K), sodium (Na), and the like. The Group 2 elements include magnesium (Mg), calcium (Ca), strontium (Sr), barium (Ba), and the like. The silicate phase may further include a rare-earth element such as lanthanum (La), and other elements such as aluminum (Al) and boron (B).

Lithium silicate is a silicate that includes lithium (Li), silicon (Si), and oxygen (O). The atomic ratio of O to Si (O/Si) in the lithium silicate is, for example, more than 2 and less than 4. When the ratio O/Si is more than 2 and less than 4 (i.e., z in the formula below satisfies the relationship $0<z<2$), this is advantageous from the viewpoint of stability of the silicate phase and lithium ion conductivity. The ratio O/Si is preferably more than 2 and less than 3. The atomic ratio of Li to Si (Li/Si) in the lithium silicate is, for example, more than 0 and less than 4.

The composition of the lithium silicate can be expressed by the formula: $Li_{2z}SiO_{2+z}$ ($0<z<2$). From the viewpoint of stability, ease of production, lithium ion conductivity, and the like, it is preferable that z satisfies the relationship $0<z<1$, and it is more preferable that z is 1/2. Lithium silicate that satisfies z=1/2 can be expressed by the formula: $Li_2Si_2O_5$.

The average particle diameter of the fine silicon phases (before the first charge) dispersed in the silicate phase may be 500 nm or less, 200 nm or more, or 50 nm or less. Due to moderately fine silicon phases being formed as described above, a change in volume is reduced during charge and discharge, and the structural stability is improved. In addition, the breakage of the particles is suppressed due to expansion and contraction of the silicon phases being made uniform, and

thus the cycle properties are improved. The average particle diameter of the silicon phases is measured by observing the cross section of the negative electrode material using SEM or TEM.
Specifically, the average particle diameter is determined by taking the average of the maximum diameters of any 100 silicon phases.

Each of the silicon phases dispersed in the silicate phase is a phase in the particle form constituted of only silicon (Si), and is constituted of a single crystallite or a plurality of crystallites. The size of the crystallite of the silicon phase may be 5 nm or more and 50 nm or less. When the size of the crystallite of the silicon phase is 50 nm or less, the amount of change in volume caused by expansion and contraction of the silicon particles due to charge and discharge can be reduced, and the cycle properties are further improved. The size of the crystallite of the silicon phase is calculated as per Scherrer's equation using the half width of the diffraction peak attributed to the Si (111) surface in the X-ray diffraction (XRD) pattern.

The content of the silicon phases in the silicate phase-containing composite particle may be 30 mass% or more and 90 mass% or less, or 35 mass% or more and 75 mass% or less, from the viewpoint of an increase in capacity and an improvement in the cycle properties.

The composition of the silicate phase-containing composite particle can be determined using, for example, the following analysis method.

<EDX>

Ten composite particles with a maximum particle diameter of 5 μm or more are randomly selected based on the backscattered electron image of the cross section of the negative electrode mixture layer, and element mapping analysis using energy-dispersive X-ray (EDX) is conducted on each composite particle. The area ratio of a target element is calculated using image analysis software. It is desirable that the observation magnification is 2000× to 20000× magnification. The average of the measurement values of the area ratios of the predetermined element contained in the ten particles is determined. The content of the target element is calculated from the obtained average value.

Desirable measurement conditions of cross-sectional SEM-EDX analysis are shown below.

<SEM-EDX Measurement Conditions>

Processing apparatus: SM-09010 (Cross Section Polisher) manufactured by JEOL Ltd.
Processing conditions: acceleration voltage 6 kV
Current value: 140 μA
Degree of vacuum: $1 \times 10^{-3}$ to $2\times10^{-3}$ Pa
Measurement apparatus: electron microscope SU-70 manufactured by Hitachi High-Tech Corporation
Acceleration voltage for analysis: 10 kV
Field: free mode
Probe current mode: Medium
Probe current range: High
Anode Ap.: 3
OBJ Ap.: 2
Analysis area: 1 μm square
Analysis software: EDAX Genesis
CPS: 20500
Lsec: 50
Time constant: 3.2

<AES>

Ten composite particles with a maximum particle diameter of 5 μm or more are randomly selected based on the backscattered electron image of the cross section of the negative electrode mixture layer, and qualitative and quantitative element analysis using an Auger electron spectroscopy (AES) analyzer (e.g., JAMP-9510F manufactured by JEOL Ltd.) is conducted on each composite particle. It is suitable that the measurement conditions are as follows: for example, the acceleration voltage is 10 kV, the beam current is 10 nA, and the analysis region is 20 μm $\phi$. The content is calculated by taking an average of the contents of the predetermined element in the ten particles.

Note that, during the charging and discharging processes, a coating is formed on the surface of the composite particle due to decomposition of the non-aqueous electrolyte and the like. In addition, the composite particle includes the coating layer on its surface and may further include a conductive layer if necessary. Accordingly, the mapping analysis

using EDX or AES is conducted on a range on the interior side away from the peripheral edge of the cross section of the composite particle (negative electrode material) by 1 μm such that a thin coating, the coating layer, and the conductive layer are not included within the measurement range. The distribution state of the carbon material inside the composite particle can also be checked through the mapping analysis. At the end of the cycle, distinction from the decomposed product of the non-aqueous electrolyte is difficult, and therefore, it is preferable to measure a sample before the start of the cycle or at the initial stage of the cycle.

<ICP>

The composite particle sample is completely dissolved in a heated acid solution (a mixed acid of hydrofluoric acid, nitric acid, and sulfuric acid), and residual carbon in the solution is filtered out. Thereafter, the obtained filtrate is analyzed through inductively coupled plasma optical emission spectroscopy (ICP) and the intensities of the spectra of the elements are measured. Subsequently, a calibration curve is prepared using commercially available standard element solutions, and the contents of the elements included in the composite particle are calculated.

Also, the contents of B, Na, K, and Al included in the silicate phase can be quantitatively analyzed in conformity with JIS R3105 (1995) (Method for Analyzing Borosilicate Glass).

Although the silicate phase and the silicon phases are present in the silicate phase-containing composite particle, Si-NMR can be used to separately quantify these phases. The Si content obtained using the above-described method is the sum of the Si content included in the silicon phases and the Si content in the silicate phase. The amount of Si element included in the composite particles is distributed to the silicate phase and the silicon phases using the results from the quantitative analysis using Si-NMR. Note that it is suitable to use a mixture that includes the silicate phase and the silicon phase at a predetermined ratio with the known Si content as a standard substance for quantification.

Desirable measurement conditions of Si-NMR analysis are shown below.

<Si-NMR Measurement Conditions>

Measurement apparatus: solid-state nuclear magnetic resonance spectrometer (INOVA-400) manufactured by Varian Medical Systems, Inc.
Probe: Varian 7mm CPMAS-2
MAS: 4.2 kHz
MAS speed: 4 kHz
Pulse: DD (45° pulse + signal acquisition time 1H decoupling)
Repetition time: 1200 sec to 3000 sec
Observation width: 100 kHz
Observation center: around -100 ppm
Signal acquisition time: 0.05 sec
Cumulative number of times: 560
Sample amount: 207.6 mg

Hereinafter, an example of a method for producing a silicate phase-containing composite particle will be described in detail.

Step (i) (Step of Preparing Lithium Silicate)

A raw material mixture that includes a raw material containing Si and an Li raw material at a predetermined ratio is used as a raw material of lithium silicate. The raw material mixture may include another element M if necessary. Lithium silicate is produced by melting the mixture obtained by predetermined amounts of the raw materials above and forming flakes by passing the melt through a metal roll. Thereafter, the flakes of the silicate are crystallized through heat treatment at a temperature that is higher than or equal to the glass transition point and lower than or equal to the melting point in an air atmosphere. Note that the flakes of the silicate can also be used without being crystallized. Also, it is possible to produce the silicate through a solid-phase reaction by firing the mixture obtained by predetermined amounts of the raw materials above at a temperature lower than or equal to the melting point without melting the mixture.

Silicon oxide can be used as the Si raw material. Examples of the Li raw material include lithium carbonate, lithium oxide, lithium hydroxide, and lithium hydride. One of these compounds may be used alone, or two or more of these compounds may be used in combination. Examples of the raw material for the element M include an oxide, a hydroxide, a carbonate compound, a hydride, a nitrate, and a sulfate of this element.

The Si raw material that has not reacted with the Li raw material may remain in the lithium silicate. The residual Si raw material is dispersed in the lithium silicate as fine crystals of silicon oxide.

Step (ii) (Step of Preparing Silicate Composite Particle)

Next, raw material silicon is blended to the lithium silicate and thus a complex is formed. For example, the composite particle is produced through Steps (a) to (c) below.

Step (a)

First, the raw material silicon powder and the lithium silicate powder are mixed at a mass ratio of, for example, 20:80 to 95:5. It is preferable to use coarse silicon particles with an average particle diameter of about several μm to several tens of μm as the raw material silicon.

Step (b)

Next, a pulverizing apparatus such as a ball mill is used to pulverize the mixture of the raw material silicon and the lithium silicate into a complex while forming fine particles of the mixture. At this time, wet pulverization may be conducted by adding an organic solvent to the mixture. A predetermined amount of organic solvent may be added at once to a pulverization container at the early stage of the pulverization, or may be intermittently added to the pulverization container a plurality of times. The organic solvent functions to prevent the pulverization target from attaching to the inner wall of the pulverization container.

Examples of the organic solvent include alcohols, ethers, fatty acids, alkanes, cycloalkanes, silicic acid esters, and metal alkoxides.

It is preferable to use coarse silicon particles with an average particle diameter of about several μm to several tens of μm as the raw material silicon. It is preferable to control the silicon particles such that the size of the crystallite thereof calculated as per Scherrer's equation using the half width of the diffraction peak attributed to the Si (111) surface in the X-ray diffraction pattern is finally 5 nm or more and 50 nm or less.

Fine particles of the raw material silicon and fine particles of the lithium silicate may be separately prepared and then mixed. Also, silicone nanoparticles and amorphous lithium silicate nanoparticles may be produced without using a pulverizing apparatus and then mixed. It is preferable to use a known method such as a vapor phase method (e.g., plasma method) or a liquid phase method (e.g., liquid phase reduction method) to produce nanoparticles.

Step (c)

Next, the pulverized product is fired while pressure is applied thereto through hot pressing or the like, and thus a fired product is obtained. The firing is conducted in, for example, an inert atmosphere (e.g., argon atmosphere, nitrogen atmosphere, etc.). The firing temperature is preferably 450°C or higher and 1000°C or lower. When the firing temperature is within the temperature range above, the minute silicon particles are likely to be dispersed in the silicate phase with low crystallinity. During the firing, the lithium silicate softens and flows so as to fill the gaps between the silicon particles. As a result, a dense block-like fired product in which the silicate phase corresponds to the sea portion and the silicon particles correspond to the island portions can be obtained. The firing temperature is preferably 550°C or higher and 900°C or lower, and more preferably 650°C or higher and 850°C or lower. The firing time is, for example, 1 hour or more and 10 hours or less.

Silicate composite particles are obtained by pulverizing the obtained fired product. Silicate composite particles with a predetermined average particle diameter can be obtained by selecting pulverizing conditions as appropriate.

Composite particles that each include a silicate phase as a matrix and silicon phases dispersed in the matrix are obtained through Step (i) and Step (ii).

The composite particle may be a composite particle (silicon oxide phase-containing composite particle) that includes a silicon oxide phase and silicon phases dispersed in the silicon oxide phase. The silicon oxide phase-containing composite particle is expressed by, for example, the formula: SiOX ($0.5 \leq X < 1.6$). The silicon oxide phase-containing composite particle is obtained by, for example, heating silicon monoxide and separating the silicon monoxide into a silicon oxide phase and fine silicon phases through a disproportionation reaction.

The composite particle may be a composite particle (carbon phase-containing composite particle) that includes a carbon phase and silicon phases dispersed in the carbon phase. The carbon phase-containing composite particle is obtained by, for example, pulverizing a mixture of a carbon source and raw material silicon into fine particles using a ball mill or the like while stirring the mixture, heating the mixture in an inert atmosphere, and pulverizing a fired product obtained through the heat treatment. Examples of the carbon source include sugars such as carboxymethyl cellulose (CMC) and

water-soluble resins such as polyvinylpyrrolidone.

The carbon phase has electrical conductivity, and therefore, with the carbon phase-containing composite particle, contact points between the composite particle and its surroundings are likely to be maintained even when a gap is formed around the composite particle. As a result, a decrease in capacity caused by repeated charge-discharge cycles is likely to be suppressed. The carbon phase may be constituted of amorphous carbon. The amorphous carbon may be hard carbon, soft carbon, or the others. The amorphous carbon commonly refers to a carbon material with an average interplanar distance d002 between (002) surfaces of greater than 0.34 nm, the interplanar distance being measured through the X-ray diffraction method.

The content of the silicon phases in the carbon phase-containing composite particle may be 30 mass% or more and 80 mass% or less, or 40 mass% or more and 70 mass% or less, from the viewpoint of an increase in capacity and an improvement in the cycle properties.

The average particle diameter of the composite particles is, for example, 1 μm or more and 25 μm or less, and may be 4 μm or more and 15 μm or less. When the average particle diameter is within the range above, favorable battery performance is likely to be obtained. Note that the term "average particle diameter" as used herein means a particle diameter (volume-average particle diameter) at a cumulative volume of 50% in a particle size distribution measured using a laser diffraction scattering method. For example, "LA-750" manufactured by HORIBA, Ltd. can be used as the measurement apparatus.

FIG. 1 shows a schematic cross-sectional view of a negative electrode material 20.

The negative electrode material 20 includes a composite particle 23 (mother particle) and a coating layer 26 that covers the surface of the composite particle 23. The composite particle 23 includes an ion-conducting phase 21 and silicon phases (silicon particles) 22 dispersed in the ion-conducting phase 21. The composite particle 23 has a sea-island structure in which the silicon phases 22 are dispersed in the matrix of the ion-conducting phase 21. The coating layer 26 includes the lithium sulfonate compound and the linear saturated fatty acid compound. The negative electrode material may include other elements in addition to the composite particle and the coating layer. For example, a conductive layer may be interposed between the composite particle and the coating layer.

A secondary battery according to an embodiment of the present disclosure includes a positive electrode, a negative electrode, and a non-aqueous electrolyte. The negative electrode includes the above-described negative electrode material for a secondary battery. The following describes the negative electrode of the secondary battery and the like.

[Negative Electrode]

The negative electrode includes, for example, a negative electrode current collector and a negative electrode mixture layer supported on the surface of the negative electrode current collector. The negative electrode mixture layer can be formed by applying, onto the surface of the negative electrode current collector, a negative electrode slurry prepared by dispersing a negative electrode mixture in a dispersion medium, followed by drying. After the drying, the coating may be rolled if necessary. The negative electrode mixture layer may be formed on one surface or both surfaces of the negative electrode current collector.

The negative electrode mixture includes the above-described negative electrode material as an essential component and may include a binding agent, a conductive agent, a thickening agent and the like as optional components. The silicon particles in the composite particle can absorb many lithium ions and thus contributes to an increase in capacity of the negative electrode.

The negative electrode active material may further include other material for an active material that electrochemically absorbs and releases lithium ions, in addition to the composite particles. A favorable example of the other material for an active material is a carbon-based active material. The volume of the composite particle increases and decreases due to charge and discharge, and therefore, if the ratio of the composite particle in the negative electrode active material increases, contact failure between the negative electrode active material and the negative electrode current collector is likely to occur during charge and discharge. Meanwhile, using the composite particle and the carbon-based active material together makes it possible to achieve excellent cycle properties even while imparting high capacity of the silicon phases to the negative electrode. The ratio of the composite particle in the sum of the composite particle and the carbon-based active material is, for example, preferably 0.5 to 15 mass% and more preferably 1 to 5 mass%. This makes it easy to achieve both an increase in capacity and an improvement in cycle properties.

Examples of the carbon-based active material include graphite, graphitizable carbon (soft carbon), and non-graphitizable carbon (hard carbon). In particular, graphite is preferable because it has excellent charge/discharge stability and low irreversible capacity. Graphite means a material having a graphite-type crystal structure and encompasses, for example, natural graphite, artificial graphite, and graphitized meso-phase carbon particles. One of the carbon-based active materials may be used alone, or two or more of the carbon-based active materials may be used in combination.

A non-porous conductive substrate (e.g., a metal foil) or a porous conductive substrate (e.g., a mesh body, a net

body, or a punched sheet) is used as the negative electrode current collector. Examples of the material of the negative electrode current collector include stainless steel, nickel, nickel alloys, copper, and copper alloys. There is no particular limitation on the thickness of the negative electrode current collector, but the thickness thereof is preferably 1 to 50 μm and more desirably 5 to 20 μm from the viewpoint of the balance between the strength and the weight reduction of the negative electrode.

Examples of the binding agent include fluororesins, polyolefin resins, polyamide resins, polyimide resins, vinyl resins, styrene-butadiene copolymer rubber (SBR), polyacrylic acid, and derivatives of polyacrylic acid. One of these binding agents may be used alone, or two or more of these binding agents may be used in combination. Examples of the conductive agent include carbon black, conductive fibers, carbon fluoride, and conductive organic materials. One of these conductive agents may be used alone, or two or more of these conductive agents may be used in combination. Examples of the thickening agent include carboxymethyl cellulose (CMC) and polyvinyl alcohol. One of these thickening agents may be used alone, or two or more of these thickening agents may be used in combination.

Examples of the dispersion medium include water, alcohols, ethers, N-methyl-2-pyrrolidone (NMP), and mixed solvents thereof.

[Positive Electrode]

The positive electrode includes, for example, a positive electrode current collector and a positive electrode mixture layer supported on the surface of the positive electrode current collector. The positive electrode mixture layer can be formed by applying, onto the surface of the positive electrode current collector, a positive electrode slurry prepared by dispersing a positive electrode mixture in a dispersion medium, followed by drying. After the drying, the coating may be rolled if necessary. The positive electrode mixture layer may be formed on one surface or both surfaces of the positive electrode current collector.

The positive electrode mixture includes a positive electrode active material as an essential component and may include a binding agent, a conductive agent, and the like as optional components.

Examples of the positive electrode active material include lithium composite metal oxides. Examples of the lithium composite metal oxides include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, and $Li_2MePO_4F$. Here, M is at least one selected from the group consisting of Na, Mg, Sc, Y, Mn, Fe, Co, Ni, Cu, Zn, Al, Cr, Pb, Sb, and B. Me includes at least a transition element (for example, Me includes at least one selected from the group consisting of Mn, Fe, Co, and Ni). Here, a, b, and c satisfy the relationships $0 \le a \le 1.2$, $0 \le b \le 0.9$, and $2.0 \le c \le 2.3$, respectively. Note that the value a, which represents the molar ratio of lithium, increases and decreases due to charge and discharge.

The same binding agent and conductive agent as those shown as the examples for the negative electrode can be used. Graphite such as natural graphite or artificial graphite may be used as the conductive agent.

The shape and thickness of the positive electrode current collector can be selected from the shape and the range similar to those for the negative electrode current collector, respectively. Examples of the material of the positive electrode current collector include stainless steel, aluminum, aluminum alloys, and titanium.

[Non-Aqueous Electrolyte]

The non-aqueous electrolyte includes a non-aqueous solvent and a lithium salt dissolved in the non-aqueous solvent. The concentration of the lithium salt in the non-aqueous electrolyte is, for example, 0.5 to 2 mol/L. The non-aqueous electrolyte may contain a known additive.

Examples of the non-aqueous solvent include cyclic carbonic acid esters, chain carbonic acid esters, and cyclic carboxylic acid esters. Examples of the cyclic carbonic acid esters include propylene carbonate (PC) and ethylene carbonate (EC). Examples of the chain carbonic acid esters include diethyl carbonate (DEC), ethylmethyl carbonate (EMC), and dimethyl carbonate (DMC). Examples of the cyclic carboxylic acid esters include γ-butyrolactone (GBL) and γ-valerolactone (GVL). One of these non-aqueous solvents may be used alone, or two or more of these non-aqueous solvents may be used in combination.

Examples of the lithium salt include lithium salts of chlorine-containing acids (e.g., $LiClO_4$, $LiAlCl_4$, and $LiB_{10}Cl_{10}$), lithium salts of fluorine-containing acids (e.g., $LiPF_6$, $LiBF_4$, $LiSbF_6$, $LiAsF_6$, $LiCF_3SO_3$, and $LiCF_3CO_2$), lithium salts of fluorine-containing acid imides (e.g., $LiN(CF_3SO_2)_2$, $LiN(CF_3SO_2)(C_4F_9SO_2)$, and $LiN(C_2F_5SO_2)_2$), and lithium halides (e.g., LiCl, LiBr, and LiI). One of these lithium salts may be used alone, or two or more of these lithium salts may be used in combination.

[Separator]

In general, it is desirable to interpose a separator between the positive electrode and the negative electrode. The

separator has high ion permeability, and appropriate mechanical strength and insulating properties. Examples of the separator include a microporous thin film, a woven cloth, and a nonwoven cloth. Examples of the material of the separator include polyolefins such as polypropylene and polyethylene.

An example of the structure of the secondary battery is a structure in which an electrode group formed by rolling up a positive electrode and a negative electrode with the separator interposed therebetween and a non-aqueous electrolyte are housed in an exterior body. Alternatively, instead of the rolled-up type electrode group, an electrode group in another form such as a stacked-type electrode group formed by stacking a positive electrode and a negative electrode with the separator interposed therebetween may also be used. The secondary battery may be, for example, cylindrical, rectangular, coin-shaped, button-shaped, laminated, or the like.

The following describes the structure of a rectangular non-aqueous electrolyte secondary battery as an example of the non-aqueous electrolyte secondary battery according to the present disclosure with reference to FIG. 2. FIG. 2 is a partially cutaway schematic perspective view of a non-aqueous electrolyte secondary battery according to an embodiment of the present disclosure.

The battery includes a rectangular battery case 4 having a bottom, and an electrode group 1 and a non-aqueous electrolyte (not illustrated) that are housed in the battery case 4. The electrode group 1 includes an elongated strip-shaped negative electrode, an elongated strip-shaped positive electrode, and a separator that is interposed therebetween and prevents these electrodes from come into direct contact. The electrode group 1 is formed by rolling up the negative electrode, the positive electrode, and the separator around a plate-shaped core and removing the core.

One end of a negative electrode lead 3 is attached to the negative electrode current collector through welding or the like. The other end of the negative electrode lead 3 is electrically connected, via an insulating plate (not illustrated) made of a resin, to a negative electrode terminal 6 provided on a sealing plate 5. The negative electrode terminal 6 is insulated from the sealing plate 5 by a gasket 7 made of a resin. One end of a positive electrode lead 2 is attached to the positive electrode current collector through welding or the like. The other end of the positive electrode lead 2 is connected to the back surface of the sealing plate 5 via the insulating plate. That is to say, the positive electrode lead 2 is electrically connected to the battery case 4, which also serves as a positive electrode terminal. The insulating plate separates the electrode group 1 from the sealing plate 5 and separates the negative electrode lead 3 from the battery case 4. The peripheral edge of the sealing plate 5 is fitted to an end portion of an opening of the battery case 4, and a portion where these are fitted to each other is laser-welded. In this manner, the opening of the battery case 4 is sealed with the sealing plate 5. A non-aqueous electrolyte injection hole provided in the sealing plate 5 is closed with a sealing plug 8.

[Examples]

Hereinafter, examples of the present disclosure will be specifically described, but the present disclosure is not limited to the following examples.

<<Examples 1 to 3>>

(Preparation of Composite Particles)

Lithium carbonate ($Li_2CO_3$) as an Li raw material and silicon dioxide ($SiO_2$) as an Si raw material were mixed such that the atomic ratio Si/Li was 1.05, and thus a mixture was obtained. The mixture was fired in an inert gas atmosphere at 800°C for 10 hours, and thus lithium silicate ($Li_2Si_2O_5$) was obtained. The obtained lithium silicate was pulverized such that the average particle diameter was 10 μm.

The pulverized lithium silicate and raw material silicon (3 N, with an average particle diameter of 10 μm) were mixed at a mass ratio of 40:60. The mixture was packed into a pot (made of SUS, volume: 500 mL) of a planetary ball mill (P-5 manufactured by Fritsch GmbH). Next, 24 balls (with a diameter of 20 mm) made of SUS were placed in the pot, the lid was closed, and the mixture was pulverized in an inert atmosphere at 200 rpm for 50 hours.

Next, the powdery mixture was taken out in an inert atmosphere and fired at 600°C for 4 hours in an inert atmosphere while pressure was applied using a hot-pressing machine, and thus a fired mixture was obtained. The obtained fired mixture was pulverized and passed through a 40-μm mesh, and thus composite particles (silicate phase-containing composite particles) were obtained. Then, a sieve was used to obtain composite particles with an average particle diameter of 10 μm.

The size of the crystallite of the silicon phases was 15 nm. The silicon phases were in the particle form and had an average particle diameter of 20 nm. The main component of the silicate phases was $Li_2Si_2O_5$, and the content of the silicate phases in the silicate phase-containing composite particle was 60 mass%.

(Formation of Conductive Layer)

Thereafter, 100 parts by mass of the composite particles was mixed with 3 parts by mass of coal-tar pitch, and the mixture was fired at 800°C in an inert atmosphere to cover the surfaces of the composite particles with conductive carbon. In this manner, a conductive layer was formed on the surface of each composite particle. The coating amount of the conductive layer was 3 mass% relative to the sum of the composite particle and the conductive layer.

(Production of Negative Electrode Material (Formation of Coating Layer on Surface of Composite Particle))

(Dry Mixing Step)

Powder of lithium methanesulfonate (MSL) and powder of lithium stearate (STL) were added to the composite particles with the conductive layer and then dry-mixing was conducted to attach MSL and STL to the surfaces of the composite particles with the conductive layer, and thus an intermediate was obtained. The addition amounts of MSL and STL relative to 100 parts by mass of the composite particles were as shown in Table 1. The dry-mixing was conducted using a ball milling method with a rocking mill apparatus manufactured by Seiwa Giken Co., Ltd. The dry-mixing was conducted using zirconia balls (with a diameter of 3 mm) at atmospheric temperature of ordinary temperature (25°C) for 30 minutes.

(Heat Treatment Step)

Next, the obtained intermediate was heated in an inert atmosphere at 270°C for 2 hours to melt STL attaching to the surfaces of the composite particles, and thus the properties of holding MSL on the surfaces of the composite particles were improved. In this manner, the coating layers (mixed layers of MSL and STL) were formed on the surfaces of the composite particles with the conductive layer, and thus a negative electrode material was obtained. The thickness T of the coating layer determined using the above-described method was approximately 1 nm to 300 nm.

(Production of Negative Electrode)

Graphite and the composite particles with the conductive layer and the coating layer (negative electrode material) were mixed at a mass ratio of 90:10, and the resulting mixture was used as a negative electrode active material. A negative electrode slurry was prepared by adding 0.9 parts by mass of carboxymethyl cellulose (CMC) and 1.0 part by mass of styrene-butadiene rubber (SBR) to 97.5 parts by mass of negative electrode active material and further adding a predetermined amount of water thereto.

After the negative electrode slurry was applied onto both surfaces of a copper foil serving as a negative electrode current collector and the coatings were dried and rolled, the copper foil was cut into a predetermined size, and thus a negative electrode having a configuration in which a negative electrode mixture layer is formed on both surfaces of the negative electrode current collector was obtained. At this time, a negative electrode current collector exposed portion was provided on a part of the negative electrode.

(Production of Positive Electrode)

A positive electrode slurry was prepared by adding 2.5 parts by mass of acetylene black and 2.5 parts by mass of polyvinylidene fluoride to 95 parts by mass of a positive electrode active material and further adding an appropriate amount of N-methyl-2-pyrrolidone (NMP). A lithium transition metal composite oxide represented by $LiNi_{0.88}Co_{0.09}Al_{0.03}O_2$ was used as the positive electrode active material.

After the positive electrode slurry was applied onto both surfaces of an aluminum foil serving as a positive electrode current collector and the coatings were dried and rolled, the aluminum foil was cut into a predetermined size, and thus a positive electrode having a configuration in which a positive electrode mixture layer is formed on both surfaces of the positive electrode current collector was obtained. At this time, a positive electrode current collector exposed portion was provided on a part of the positive electrode.

(Preparation of Non-Aqueous Electrolyte)

A mixed solvent was obtained by mixing ethylene carbonate (EC), ethylmethyl carbonate (EMC), and dimethyl carbonate (DMC) at a volume ratio of 20:5:75. A non-aqueous electrolyte was prepared by dissolving lithium hexafluorophosphate in the mixed solvent at a concentration of 1 mol/liter.

(Production of Secondary Battery)

A positive electrode lead made of aluminum was attached to the positive electrode current collector exposed portion of the positive electrode, and a negative electrode lead made of nickel was attached to the negative electrode current collector exposed portion of the negative electrode. The positive electrode and the negative electrode were rolled up with a separator made of a polyolefin interposed therebetween and were then pressed in the radial direction, and thus a flat rolled-up type electrode body was produced. A secondary battery for evaluation was obtained by housing the electrode body in an exterior body made of an aluminum laminated sheet, injecting the non-aqueous electrolyte, and then sealing the opening of the exterior body. In Table 1, A1 to A3 are secondary batteries of Examples 1 to 3, respectively.

<<Comparative Example 1>>

A secondary battery B1 was obtained in the same manner as the secondary battery A1 of Example 1, except that the coating layers were not formed on the surfaces of the composite particles with the conductive layer.

<<Comparative Example 2>>

A secondary battery B2 was obtained in the same manner as the secondary battery A1 of Example 1, except that STL was not added in the dry mixing step.

<<Comparative Example 3>>

A secondary battery B3 was obtained in the same manner as the secondary battery A1 of Example 1, except that MSL was not added in the dry mixing step.

[Evaluation]

The secondary batteries A1 to A3 and B1 to B3 obtained as described above were evaluated as follows.

(Initial Discharge Capacity, First Side Reaction Amount)

Constant current charging was conducted at 25°C at a current of 0.3 C until the voltage reached 4.2 V, and then constant voltage charging was conducted at a voltage of 4.2 V until the current reached 0.02 C. Thereafter, discharging was conducted at a current of 0.5 C until the voltage reached 2.5 V The initial charge capacity and the initial discharge capacity under these conditions were determined. Note that the charge capacity and the discharge capacity were determined as capacities per 1 g of the composite particles.

A first charge/discharge efficiency E (%) was determined using the obtained charge capacity and discharge capacity as per the equation below.

$$\text{First charge/discharge efficiency E} = (\text{discharge capacity} / \text{charge capacity}) \times 100$$

A first side reaction amount was determined using the obtained first charge/discharge efficiency E as per the equation below. Note that E0 in the equation is the first charge/discharge efficiency of the secondary battery B1 of Comparative Example 1.

$$\text{First side reaction amount} = \{(100-E)/(100-E0)\} \times 100$$

(Cycle Degradation Ratio)

Constant current charging was conducted at 25°C at a current of 0.3 C until the voltage reached 4.2 V, and then constant voltage charging was conducted at a voltage of 4.2 V until the current reached 0.02 C. Thereafter, discharging was conducted at a current of 0.5 C until the voltage reached 2.5 V This round of charge and discharge was taken as one cycle, and this cycle was repeated 100 times.

A discharge capacity maintenance ratio R (%) was determined using a discharge capacity C1 at the first cycle and

a discharge capacity C2 at 100th cycle as per the equation below.

Discharge capacity maintenance ratio R = (discharge capacity C2 / discharge capacity C1)×100

A cycle degradation ratio was determined using the obtained discharge capacity maintenance ratio R as per the equation below. Note that R0 in the equation is the discharge capacity maintenance ratio of the secondary battery B1 of Comparative Example 1.

$$\text{Cycle degradation ratio} = \{(100-R)/(100-R0)\}\times 100$$

Table 1 shows the evaluation results. In Table 1, the initial capacities are each expressed as the relative value (index) when the initial capacity of the secondary battery B1 of Comparative Example 1 is taken as 100.

[Table 1]

| Secondary battery | Ion-conducting phase | Coating layer | | Initial discharge capacity | First side reaction amount | Cycle degradation ratio |
|---|---|---|---|---|---|---|
| | | MSL addition amount (parts by mass) | STL addition amount (parts by mass) | | | |
| A1 | Silicate phase | 6 | 2 | 99.6 | 85.4 | 83.5 |
| A2 | | 4 | 2 | 99.1 | 89.3 | 81.4 |
| A3 | | 2 | 2 | 97.2 | 95.1 | 88.5 |
| B1 | | 0 | 0 | 100 | 100 | 100 |
| B2 | | 0 | 2 | 94.8 | 99.5 | 99.8 |
| B3 | | 2 | 0 | 94.5 | 99.7 | 98.5 |

Regarding the secondary batteries A1 to A3, the initial capacity was high, and the first side reaction amount and the cycle degradation ratio were small. The secondary batteries A1 to A3 had excellent cycle properties compared with the secondary batteries B1 to B3. The cycle degradation ratios of the battery B2 and the battery B3 only slightly decreased with respect to the battery B1. On the other hand, the cycle degradation ratio of the battery A3 significantly decreased with respect to the battery B1.

Surface analysis was conducted on the negative electrode materials used in the secondary batteries A1 to A3 using XPS. As a result, it was confirmed that a large amount of MSL was present in the layer inner-side portion, which is a region 0.2T or more deep from the outermost surface of the coating layer, whereas a small amount of MSL or substantially no MSL was present in the layer surface-side portion, which is within a depth of less than 0.01T from the outermost surface of the coating layer.

<<Examples 4 to 6, Comparative Examples 4 to 6>>

Carbon phase-containing composite particles were used as the composite particles. The carbon phase-containing composite particles were produced as described below.

Coal pitch (MCP250 manufactured by JFE Chemical Corporation) serving as a carbon source and raw material silicon (3 N, with an average particle diameter of 10 μm) were mixed at a mass ratio of 50:50. The mixture was filled into a pot (made of SUS, volume: 500 mL) of a planetary ball mill (P-5 manufactured by Fritsch GmbH), 24 balls (with a diameter of 20 mm) made of SUS were placed in the pot, the lid was closed, the mixture was pulverized in an inert atmosphere at 200 rpm for 50 hours, and thus a composite product of the silicon phase and the carbon source was obtained.

Next, the composite product of the silicon phase and the carbon source was fired in an inert gas atmosphere to carbonize the carbon source, and thus a fired product in which the silicon phases were dispersed in the carbon phase containing amorphous carbon was obtained. Then, the fired product was pulverized using a jet mill, and thus carbon phase-containing composite particles with an average particle diameter of 10 μm were obtained.

The size of the crystallite of the silicon phases was 15 nm. The silicon phases were in the particle form and had an average particle diameter of 20 nm. The content of the silicon phases in the carbon phase-containing composite particle was 60 mass%.

A conductive layer was not formed on the surface of each carbon phase-containing composite particle. Secondary batteries A4 to A6 of Examples 4 to 6 were obtained in the same manner as the secondary batteries A1 to A3 of Examples 1 to 3, except that the carbon phase-containing composite particles were used in the negative electrode material production step instead of the silicate phase-containing composite particles with the conductive layer. Also, secondary batteries B4 to B6 of the Comparative Examples 4 to 6 were produced in the same manner as the secondary batteries B1 to B3 of Comparative Examples 1 to 3, except the description above.

The secondary batteries A4 to A6 and B4 to B6 obtained as described above were evaluated in the same manner as described above. Note that E0 in the calculation equation for the first side reaction amount and R0 in the calculation equation for the cycle degradation ratio are the first charge/discharge efficiency and the discharge capacity maintenance ratio of the secondary battery B4 of Comparative Example 4, respectively.

Table 2 shows the evaluation results. In Table 2, the initial capacities are each expressed as the relative value (index) when the initial capacity of the secondary battery B4 of Comparative Example 4 is taken as 100.

[Table 2]

| Secondary battery | Ion-conducting phase | Coating layer | | Initial discharge capacity | First side reaction amount | Cycle degradation ratio |
|---|---|---|---|---|---|---|
| | | MSL addition amount (parts by mass) | STL addition amount (parts by mass) | | | |
| A4 | Carbon phase | 6 | 2 | 98.6 | 89.6 | 78.6 |
| A5 | | 4 | 2 | 98.9 | 91.5 | 94.4 |
| A6 | | 2 | 2 | 98.6 | 97.4 | 93.7 |
| B4 | | 0 | 0 | 100 | 100 | 100 |
| B5 | | 0 | 2 | 94.9 | 99.3 | 99.7 |
| B6 | | 2 | 0 | 94.7 | 99.8 | 98.3 |

Regarding the secondary batteries A4 to A6, the initial capacity was high, and the first side reaction amount and the cycle degradation ratio were small. The secondary batteries A4 to A6 had excellent cycle properties compared with the secondary batteries B4 to B6. The cycle degradation ratios of the battery B5 and the battery B6 only slightly decreased with respect to the battery B4. On the other hand, the cycle degradation ratio of the battery A6 significantly decreased with respect to the battery B4.

Surface analysis was conducted on the negative electrode materials used in the secondary batteries A4 to A6 using XPS. As a result, it was confirmed that a large amount of MSL was present in the layer inner-side portion, which is a region 0.2T or more deep from the outermost surface of the coating layer, whereas a small amount of MSL or substantially no MSL was present in the layer surface-side portion, which is within a depth of less than 0.01T from the outermost surface of the coating layer.

[Industrial Applicability]

The non-aqueous electrolyte secondary battery according to the present disclosure is useful as a main power source for mobile communication devices, portable electronic devices, and the like.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 20: negative electrode material, 21: ion-conducting phase, 22: silicon phase, 23: composite particle, 26: coating layer

## Claims

1. A negative electrode material for a secondary battery, comprising:

    a silicon-containing particle; and
    a coating layer that covers at least a portion of a surface of the silicon-containing particle,
    wherein the silicon-containing particle includes:

        an ion-conducting phase; and
        silicon phases dispersed in the ion-conducting phase, and

    the coating layer includes:

        a lithium sulfonate compound; and
        a linear saturated fatty acid compound having 10 or more carbon atoms.

2. The negative electrode material for a secondary battery according to claim 1,
wherein the ion-conducting phase includes at least one type selected from the group consisting of a silicate phase, a silicon oxide phase, and a carbon phase.

3. The negative electrode material for a secondary battery according to claim 1 or 2,
wherein the lithium sulfonate compound includes a compound represented by General Formula (1):

[Chemical Formula 1]

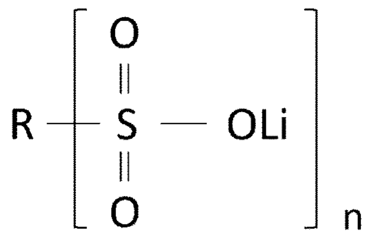

(1)

where R is an n-valent aliphatic hydrocarbon group having 1 to 5 carbon atoms, and n is 1 or 2.

4. The negative electrode material for a secondary battery according to claim 3,
wherein the lithium sulfonate compound includes at least one type selected from the group consisting of lithium methanesulfonate, lithium ethanesulfonate, and lithium propanesulfonate.

5. The negative electrode material for a secondary battery according to any one of claims 1 to 4,
wherein an amount of the lithium sulfonate compound attached to a surface of the silicon-containing particle is 1 part by mass or more relative to 100 parts by mass of the silicon-containing particle.

6. The negative electrode material for a secondary battery according to any one of claims 1 to 5,
wherein the number of carbon atoms in the linear saturated fatty acid compound is 10 or more and 30 or less.

7. The negative electrode material for a secondary battery according to any one of claims 1 to 6,
wherein the linear saturated fatty acid compound includes a stearic acid compound.

8. The negative electrode material for a secondary battery according to any one of claims 1 to 7,
wherein an amount of the linear saturated fatty acid compound attached to a surface of the silicon-containing particle is 1 part by mass or more relative to 100 parts by mass of the silicon-containing particle.

9. The negative electrode material for a secondary battery according to any one of claims 1 to 8,
wherein, when surface analysis is conducted using X-ray photoelectron spectroscopy, a peak derived from the lithium sulfonate compound is observed in a layer inner-side portion of the coating layer.

**10.** The negative electrode material for a secondary battery according to any one of claims 1 to 9, wherein a conductive layer that includes a conductive carbon material is interposed between the silicon-containing particle and the coating layer.

**11.** A secondary battery comprising:

a positive electrode;
a negative electrode; and
a non-aqueous electrolyte,
wherein the negative electrode includes the negative electrode material for a secondary battery according to any one of claims 1 to 10.

*FIG. 1*

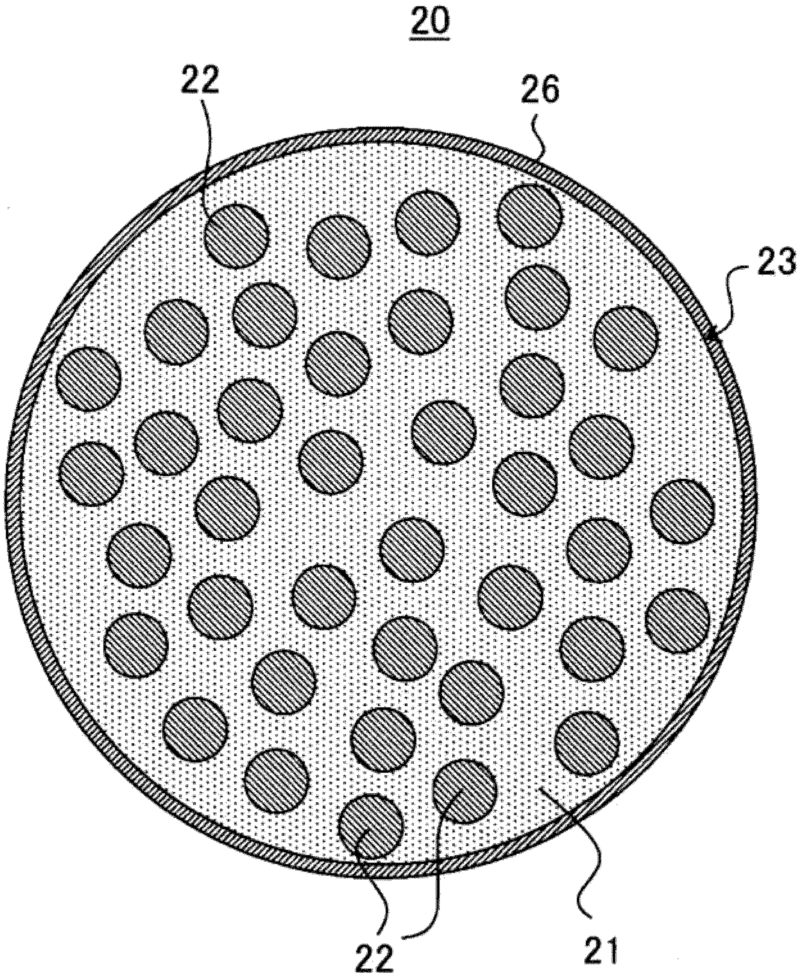

FIG. 2

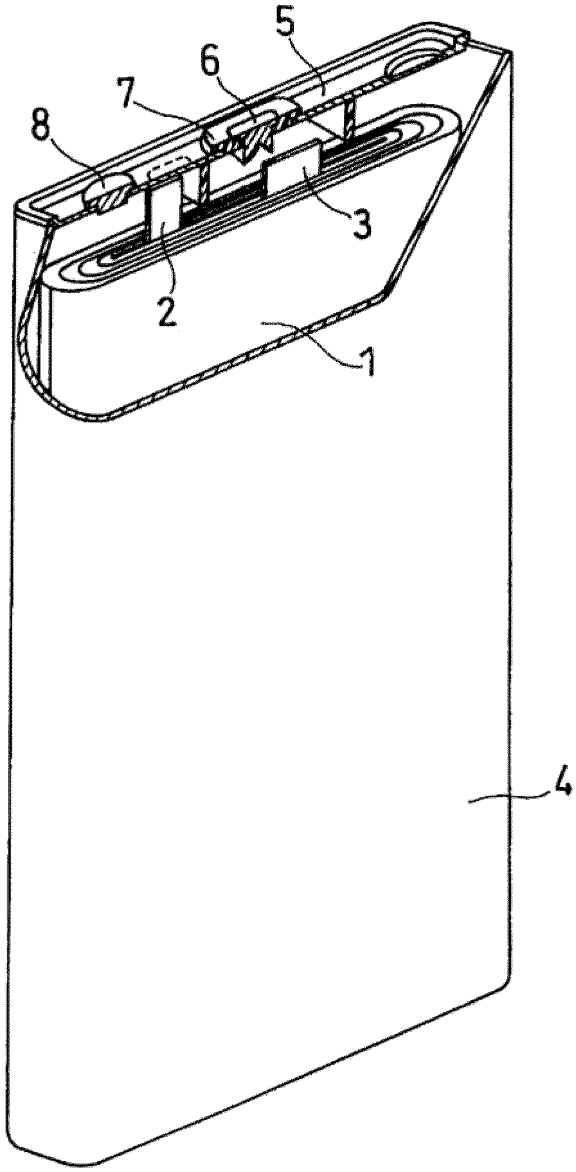

## INTERNATIONAL SEARCH REPORT

International application No.
**PCT/JP2023/011990**

**A. CLASSIFICATION OF SUBJECT MATTER**

***H01M 4/38***(2006.01)i; ***H01M 4/36***(2006.01)i
FI: H01M4/38 Z; H01M4/36 A; H01M4/36 C

According to International Patent Classification (IPC) or to both national classification and IPC

**B. FIELDS SEARCHED**

Minimum documentation searched (classification system followed by classification symbols)

H01M4/38; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2014/119375 A1 (NEC CORPORATION) 07 August 2014 (2014-08-07) claim 7, paragraphs [0023], [0027], [0029], [0036], [0055], [0073], [0096] | 1-11 |
| A | JP 2022-29448 A (MITSUBISHI CHEM CORP) 17 February 2022 (2022-02-17) claim 1, paragraph [0013] | 1-11 |
| A | JP 2015-159050 A (HITACHI LTD) 03 September 2015 (2015-09-03) claims 1-3 | 1-11 |
| P, A | CN 114400306 A (HUIZHOU BILLION-WEFT LITHIUM-ENERGY-SHARE LIMITED COMPANY) 26 April 2022 (2022-04-26) claims 1-10 | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2023** | **06 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/011990**

| Patent document cited in search report | Publication date (day/month/year) | Patent family member(s) | Publication date (day/month/year) |
|---|---|---|---|
| WO 2014/119375 A1 | 07 August 2014 | US 2016/0006010 A1 claim 7, paragraphs [0023], [0027], [0029], [0036], [0054], [0072], [0096] | |
| JP 2022-29448 A | 17 February 2022 | (Family: none) | |
| JP 2015-159050 A | 03 September 2015 | (Family: none) | |
| CN 114400306 A | 26 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019151016 A1
- WO 2019151026 A1